**Europäisches Patentamt**

**European Patent Office**

**Office européen des brevets**

(19)

(11) Veröffentlichungsnummer: **0 129 866**
**B1**

## (12) EUROPÄISCHE PATENTSCHRIFT

(45) Veröffentlichungstag der Patentschrift:
01.04.87

(21) Anmeldenummer: 84107165.7

(22) Anmeldetag: 22.06.84

(51) Int. Cl.⁴: **B 21 D 37/04**

(54) **Stanzmaschine mit einer Vorrichtung zum Speichern und Wechseln von Werkzeugen.**

(30) Priorität: **25.06.83 DE 3322960**

(43) Veröffentlichungstag der Anmeldung:
**02.01.85 Patentblatt 85/1**

(45) Bekanntmachung des Hinweises auf die Patenterteilung:
**01.04.87 Patentblatt 87/14**

(84) Benannte Vertragsstaaten:
**AT CH DE FR GB IT LI SE**

(56) Entgegenhaltungen:
**DE - A - 3 116 023**
**DE - B - 2 525 212**
**FR - A - 2 317 027**

(73) Patentinhaber: **C. Behrens AG, Hackelmasch 1,**
**D-3220 Alfeld, Leine (DE)**

(72) Erfinder: **Bredow, Walter, Ziegeimasch 16A,**
**D-3220 Alfeld(Leine) (DE)**

(74) Vertreter: **Sobisch, Peter, Dipl.-Ing. et al, Patentanwälte**
**Dipl.-Inge. Röse, Kosel & Sobisch Odastrasse 4a**
**Postfach 129, D-3353 Bad Gandersheim 1 (DE)**

## Beschreibung

Die Erfindung bezieht sich auf eine Stanzmaschine entsprechend dem Oberbegriff des Anspruchs 1.

Bei im Rahmen der Blechverarbeitung eingesetzten Revolverschneidpressen hat die Automatisierung hinsichtlich der Werkstückbeschickung und -handhabung, insbesondere bei Verwendung numerisch gesteuerter Koordinatentische einen hohen Stand erreicht. Hierbei befinden sich die, für die Bearbeitung der flächenhaften, plattenartigen Werkstücke erforderlichen unterschiedlichen Werkzeugsätze entlang von Teilkreisen, die auf drehbar gelagerten Revolvertellern verlaufen. Ein Wechsel des in den oberhalb und unterhalb des zu bearbeitenden Werkstückes in der Arbeitsstation befindlichen Werkzeuges kann bei derartigen Werkzeugmaschinen durch einfache Drehung der Revolverteller bewerkstelligt werden, welches in kürzester Zeit möglich ist. Von Nachteil ist hierbei jedoch die begrenzte Werkzeugaufnahmefähigkeit der Revolverteller, wobei ein Wechsel des in den einzelnen Werkzeugstationen des Revolvertellers gehaltenen Werkzeuges, welches üblicherweise aus Stempel, Abstreifer und Matrize besteht, im allgemeinen manuell vorgenommen wird. Hierbei ist der Zeitbedarf für den Wechsel eines Werkzeugsatzes sowohl von der Grösse der jeweiligen Werkzeugstation als auch von der Geschicklichkeit des jeweiligen Bedieners abhängig.

Aus der DE-B2-2525212 ist eine zum Bohren, Fräsen oder dergleichen dienende Werkzeugmaschine mit einer Einzelkopfstation bekannt, neben welcher sich eine, als horizontal umlaufbare Magazinkette ausgebildete Vorrichtung zum Wechseln und Speichern von Werkzeugen befindet. In dem horizontalen Zwischenraum zwischen dieser Vorrichtung und der Werkzeugmaschine befindet sich eine Werkzeugwechseleinrichtung, welche mit Klemm- bzw. Spanneinrichtungen ausgerüstet ist, die den jeweiligen Werkzeugaufnahmen der Magazinkette und der Werkzeugmaschine angepasst sind. Nachteilig ist bei dieser bekannten Werkzeugmaschine die begrenzte Werkzeugkapazität sowie ein von der Grösse der Magazinkette abhängiger Standflächenbedarf.

Es ist die Aufgabe der Erfindung, eine Stanzmaschine der eingangs genannten Gattung zu konzipieren, bei welcher sich bei begrenztem Standflächenbedarf und schnellem Werkzeugwechsel ein gegenüber dem Stand der Technik vergrössertes Werkzeugreservoir ergibt. Gelöst ist diese Aufgabe durch die Merkmale des Kennzeichnungsteils des Anspruchs 1. Erfindungswesentlich ist somit die Verknüpfung einer Revolverschneidpresse mit einem als Magazinkette ausgestalteten Werkzeugmagazin über eine Werkzeugwechseleinrichtung sowie die besondere Anordnung der Magazinkette relativ zu der Revolverschneidpresse. Es werden auf diese Weise die Vorzüge einer Revolverschneidpresse, nämlich der in kürzester Zeit zu realisierende Wechsel des in deren Arbeitsstation befindlichen Werkzeugs mit den Vorzügen eines grossen Werkzeugreservoirs verknüpft. Denn der Werkzeugbestand der Revolverteller, der von Natur aus mit Hinblick auf deren Abmessungen begrenzt sein muss, wird entsprechend der Aufnahmekapazität des äusseren Werkzeugmagazins, nämlich der Magazinkette erweitert. Es stehen somit für den mechanischen Bearbeitungsprozess zwei voneinander unabhängige Werkzeugmagazine zur Verfügung, nämlich die Revolverteller und die Magazinkette. Gleichzeitig ergibt sich aufgrund der besonderen Anordnung der Magazinkette relativ zu den Revolvertellern eine nur unwesentliche Vergrösserung der benötigten Standfläche. Die bezüglich der Halterung der Werkzeugeinsätze weitestgehend den Revolvertellern der Revolverschneidpresse nachgebildete Magazinkette ist in genau definierten, von der Anordnung der Arretiereinrichtung abhängigen Stellungen feststellbar, wodurch sowohl das Entnehmen als auch das Einsetzen der Werkzeugeinsätze in die Aufnahmesegmente erleichtert wird.

Die Merkmale des Anspruchs 2 stellen eine besonders einfache Ausgestaltung der Arretiereinrichtung dar.

Die Ausgestaltung der Werkzeugwechselvorrichtung entsprechend den Ansprüchen 4 bis 7 dient der sicheren Handhabung der Werkzeugeinsätze, wobei der jeweils erfasste Werkzeugeinsatz bezüglich aller relevanten Richtungen formschlüssig fixiert ist.

Durch die Merkmale des Anspruchs 8 wird die Eignung der Greifereinrichtung für einen automatischen bzw. rechnergesteuerten Betrieb verbessert.

Die Merkmale des Anspruchs 9 sind insbesondere für den, einen Stempel enthaltenden und zum Einsatz in den oberen der beiden übereinander angeordneten Revolverteller konzipierten Werkzeugeinsatz von grosser Bedeutung, da der in einem Stempelhalter geführte Stempel während der Handhabung gegenüber einem Herausfallen nach unten gesichert werden und insbesondere in dieser Stellung der jeweiligen Werkzeugstation des Revolvertellers übergeben werden muss.

Aufgrund der Merkmale der Ansprüche 10 bis 12 sind die Werkzeugeinsätze in den Aufnahmesegmenten der Magazinkette allseitig formschlüssig fixiert, wobei diese Fixierung jedoch in Richtung der Entnahme bzw. des Einsetzens der Werkzeugeinsätze lösbar ausgestaltet ist.

Den Sicherungsbügeln gemäss Anspruch 13, kommt eine dem Sicherungsbügel der Greifereinrichtung entsprechende Funktion und Bedeutung zu.

Die Werkzeugbeschickungseinrichtung gemäss Anspruch 14 kann grundsätzlich ähnlich ausgestaltet sein wie die Werkzeugwechselvorrichtung. Sie ist insbesondere dann von grösstem Nutzen, wenn die Magazinkette auf dem Maschinengestell der Revolverschneidpresse in einer solchen Höhe angebracht ist, welche ein manuelles Beschicken der Magazinkette mit Werkzeugeinsätzen erschweren würde.

In den Zeichnungen ist vereinfacht und schematisch ein Ausführungsbeispiel dargestellt. Es zeigen:

Fig. 1 eine Seitenansicht einer Revolverschneidpresse mit einer vollautomatischen Werkzeugwechselvorrichtung;

Fig. 2 die Revolverschneidpresse gemäss Fig. 1 in der Draufsicht gemäss Pfeil II;

Fig. 3 eine Vorderansicht der Revolverschneidpresse entsprechend Fig. 1 gemäss Pfeil III;

Fig. 4 einen Schnitt IV–IV der Fig. 1 in vergrösserter Darstellung;

Fig. 5 einen Schnitt V–V der Fig. 4 in vergrösserter Darstellung;

Fig. 6 einen Schnitt VI–VI der Fig. 5;

Fig. 7 eine schematische Darstellung des Umfassens des Kupplungsteils eines Werkzeugeinsatzes durch die Spannbacken einer Greifzange;

Fig. 8 einen Schnitt VII–VIII der Fig. 2;

Fig. 9 eine Ansicht IX gemäss Fig. 8;

Fig. 10 einen Schnitt X–X der Fig. 2;

Fig. 11 eine Ansicht XI der Fig. 8;

Fig. 12 eine teilweise Ansicht des Schnittes durch einen Revolverteller mit Darstellung von Aufbau und Wirkungsweise des den Werkzeugeinsatz sichernden Sperrbolzens.

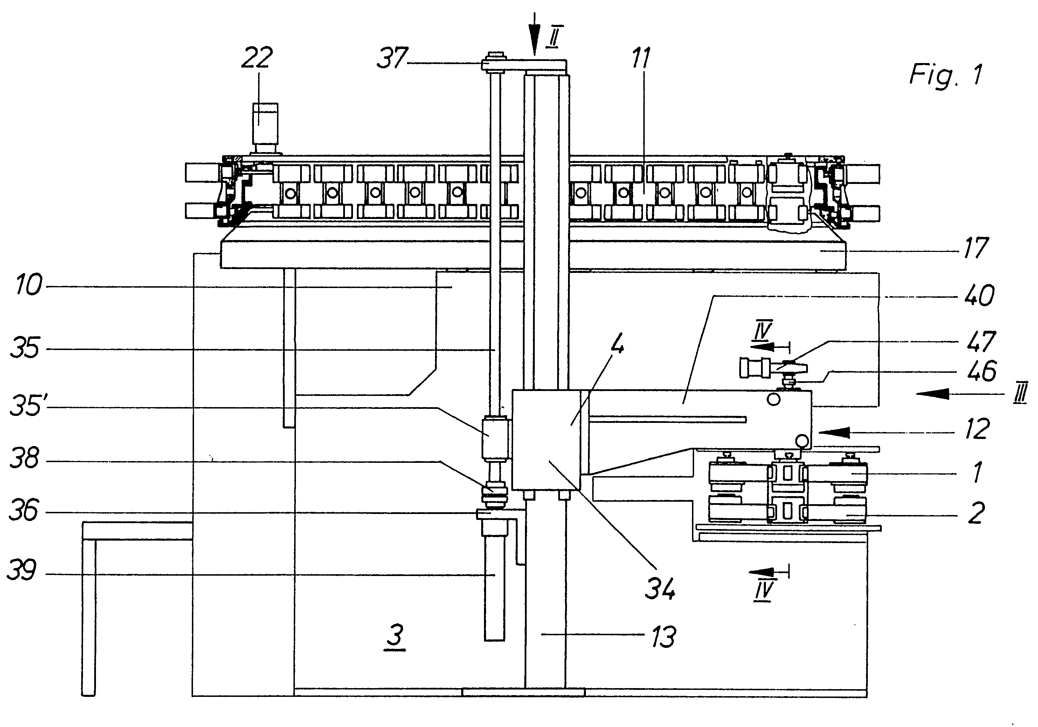

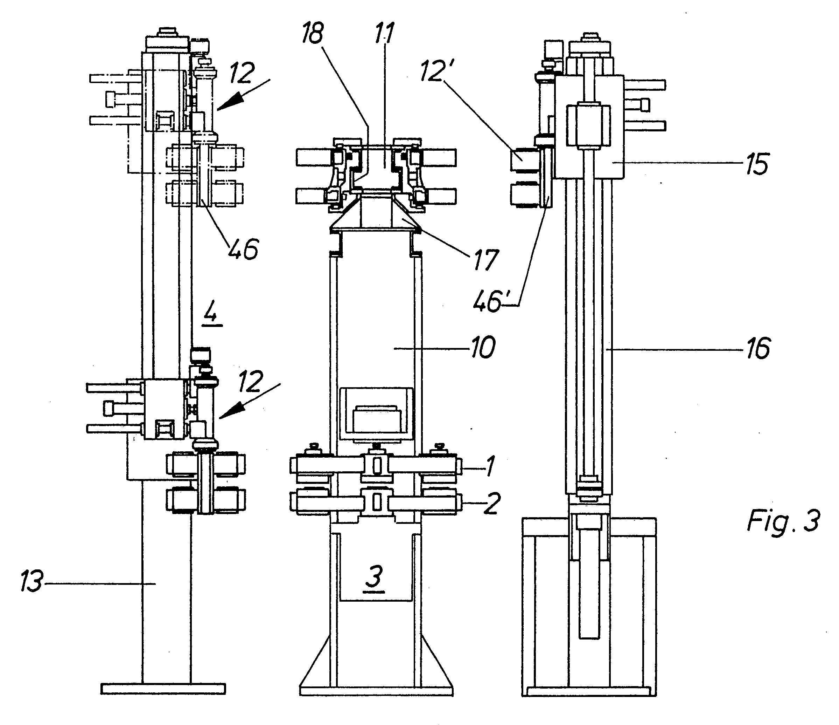

Mit 3 ist in den Fig. 1 bis 3 eine Revolverschneidpresse bezeichnet, deren obere und untere Revolverteller 1 und 2 mit einer Werkzeugwechselvorrichtung 4 zusammenwirken, die im folgenden noch näher erläutert wird.

Auf dem Maschinengestell 10 der Revolverschneidpresse 3 ist oberhalb der Ebene der Revolverteller 1 und 2 eine der Speicherung von Werkzeugen dienende Magazinkette 11 gelagert. Die Lagerung gegenüber dem Maschinengestell 10 erfolgt an einem Aufsatz 18, der unter Zwischenanordnung eines Grundrahmens 17 mit dem Maschinengestell 10 in fester Verbindung steht. Die Magazinkette 11 ist endlos ausgebildet und über zwei Kettenräder 21, 23 in einer Horizontalebene geführt, wobei das Kettenrad 21 über einen Motor 22 antreibbar ist.

Mit 15 ist eine Werkzeugbeschickungseinrichtung bezeichnet, mittels welcher Werkzeugeinsätze 5 für den oberen Revolverteller 1 bzw. Werkzeugeinsätze 6 für den unteren Revolverteller 2 in die Magazinkette 11 eingesetzt werden können. Die zum Einsetzen in die Revolverteller 1 und 2 konzipierten Werkzeugeinsätze sind kassettenartig ausgestaltet und enthalten das für den Bearbeitungsvorgang mittels der Revolverschneidpresse erforderliche Werkzeug. Die kassettenartige Ausgestaltung der Werkzeugeinsätze 5, 6 erleichtert die mechanische Handhabbarkeit mittels der Werkzeugbeschickungseinrichtung 15 ebenso wie mit der Werkzeugwechseleinrichtung 4, wobei gleichzeitig der mechanische Aufbau der Magazinkette 11 vereinfacht wird. Eine Notwendigkeit der Werkzeugbeschickungseinrichtung 15 ergibt sich aus der Höhe der Anordnung der umlaufbar ausgestalteten Magazinkette 11.

Die in ihrem mechanischen Aufbau noch zu erläuternde Magazinkette 11 trägt umfangsseitig Aufnahmesegmente 25, die in der Draufsicht, d.h.

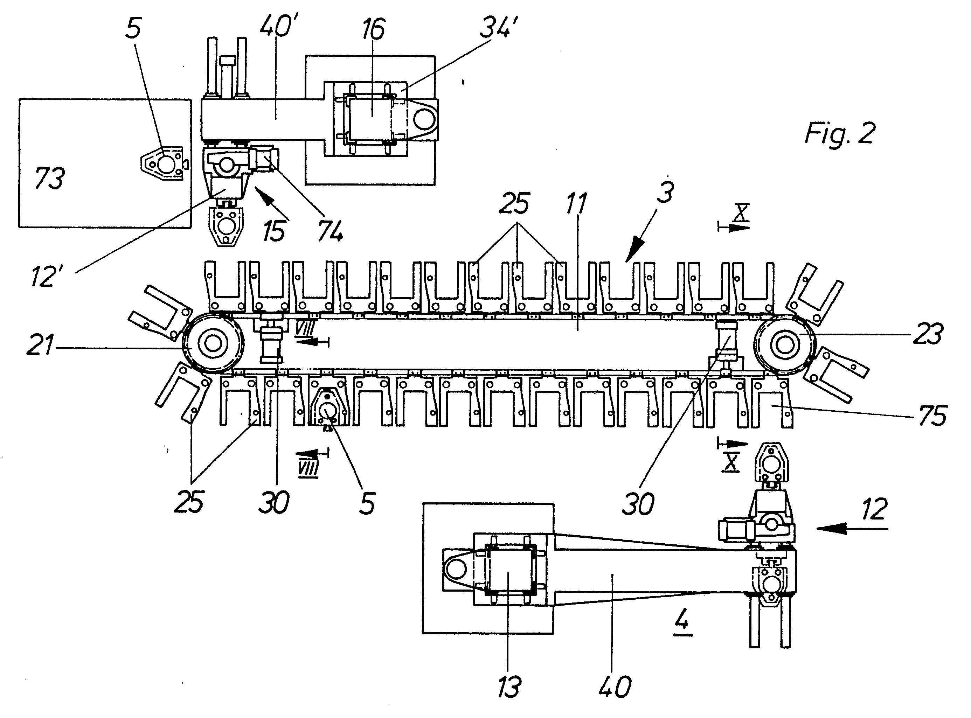

in der Horizontalebene des Umlaufs der Magazinkette 11 U-förmig ausgestaltet sind und für die Aufnahme der Werkzeugeinsätze 5, 6 eingerichtet sind. Um sowohl während des Einsetzens von Werkzeugeinsätzen 5, 6 in die Magazinkette 11 als auch während der Entnahme dieser Werkzeugeinsätze aus der Magazinkette eine genau definierte Position zwischen einem Aufnahmesegment 25 und der Werkzeugwechselvorrichtung 4 bzw. der Werkzeugbeschickungsvorrichtung 15 zu erreichen, ist die Magazinkette 11 in dem gezeigten Ausführungsbeispiel gemäss Fig. 2 mit zwei Arretiereinrichtungen 30 ausgerüstet.

Die Werkzeugwechselvorrichtung 4 besteht im wesentlichen aus einem, entlang einer vertikal angeordneten Führungssäule 13 verfahrbar gehaltenen Schlitten 34, der einen Ausleger 40 trägt. An dem der Führungssäule 13 abgekehrten Ende des Auslegers 40 befindet sich eine Greifereinrichtung 12, die unter Mitwirkung eines Antriebes 47 um eine vertikal verlaufende Schwenkachse 46 drehbar gelagert ist. Die Greifereinrichtung 12 wird in ihrem mechanischen Aufbau noch näher erläutert werden. Der vertikale Antrieb des Schlittens 34 erfolgt über einen Motor 39, der über einen Kugelrolltrieb 35 und die Mutter 35' mit dem Schlitten 34 zusammenwirkt. Mit 36 und 37 ist jeweils das untere und das obere Lager des Kugelrolltriebes bezeichnet. Der Motor 39 kann beispielsweise als Gleichstrommotor ausgestaltet sein – es sind jedoch auch andere Antriebsarten wie Hydraulikmotoren und spezielle Drehstrommotoren denkbar.

Der konstruktive Aufbau der Werkzeugbeschickungseinrichtung 15 ist grundsätzlich ähnlich demjenigen der Werkzeugwechselvorrichtung 4. Das heisst, ein Ausleger 40' ist mittels eines Schlittens 34' entlang einer vertikal angeordneten Führungssäule 16 verfahrbar gehalten, wobei sich an dem, der Führungssäule 16 abgekehrten Ende des Auslegers 40' eine um eine vertikale Schwenkachse 46' unter Mitwirkung eines Antriebes 74 drehbar gelagerte Greifereinrichtung 12' befindet. Auf vorhandene Unterschiede zwischen den Greifereinrichtungen 12' und 12 wird noch eingegangen werden.

Mit 73 ist ein Tisch zur Bereitstellung von Werkzeugeinsätzen 5, 6 jeweils für den oberen und unteren Revolverteller 1, 2 der Revolverschneidpresse bezeichnet.

Es wird die Möglichkeit geschaffen, das im Revolverteller einer Revolverschneidpresse befindliche Werkzeug mittels der Werkzeugwechselvorrichtung 4 gegen ein anderes, in der Magazinkette 11 gehaltenes auszutauschen, wobei die Magazinkette 11 ihrerseits über eine Werkzeugbeschickungseinrichtung mit dem erforderlichen Werkzeug versorgt wird. Die Magazinkette 11 kann theoretisch beliebig gross gemacht werden und im Bedarfsfall in Abänderung des gezeigten Ausführungsbeispiels das Maschinengestell 10 der Revolverschneidpresse beidseitig weit überragen, so dass ein umfassendes Werkzeugsortiment für den Bearbeitungsprozess in der Revolverschneidpresse bereitgehalten wird.

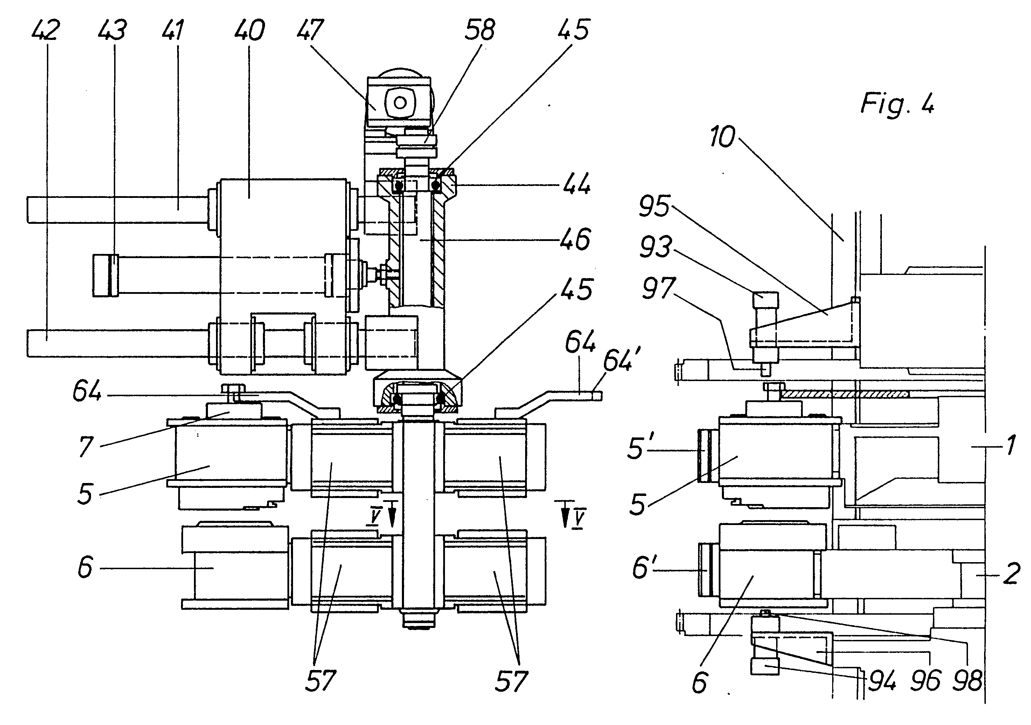

Die nachfolgende Beschreibung der Fig. 4 bis 12 erfolgt unter Bezugnahme auf die Fig. 1 bis 3, wobei jedoch Funktionselemente, die mit denjenigen der Fig. 1 bis 3 übereinstimmen, entsprechend beziffert sind, so dass auf eine diesbezügliche wiederholte Beschreibung aus Übersichtlichkeitsgründen verzichtet wird.

Gemäss Fig. 4 ist die Schwenkachse 46 der Greifereinrichtung 12 der Werkzeugwechselvorrichtung 4 in Lagern 45 gelagert, deren gemeinsames Lagergehäuse 44 entlang Führungselementen 41, 42 in einer Horizontalebene in Richtung auf die Magazinkette 11 (Fig. 2) hin gegenüber dem Ausleger 40 verfahrbar gehalten ist. Die Verfahrbarkeit ist durch eine Kolben-Zylinder-Einheit 43 realisiert, deren Zylinder an dem Ausleger 40 und deren Kolben an dem Lagergehäuse 44 abgestützt ist. Das Lagergehäuse 44 trägt darüber hinaus den über eine Kupplung 58 mit der Schwenkachse 46 in Verbindung stehenden Antrieb 47.

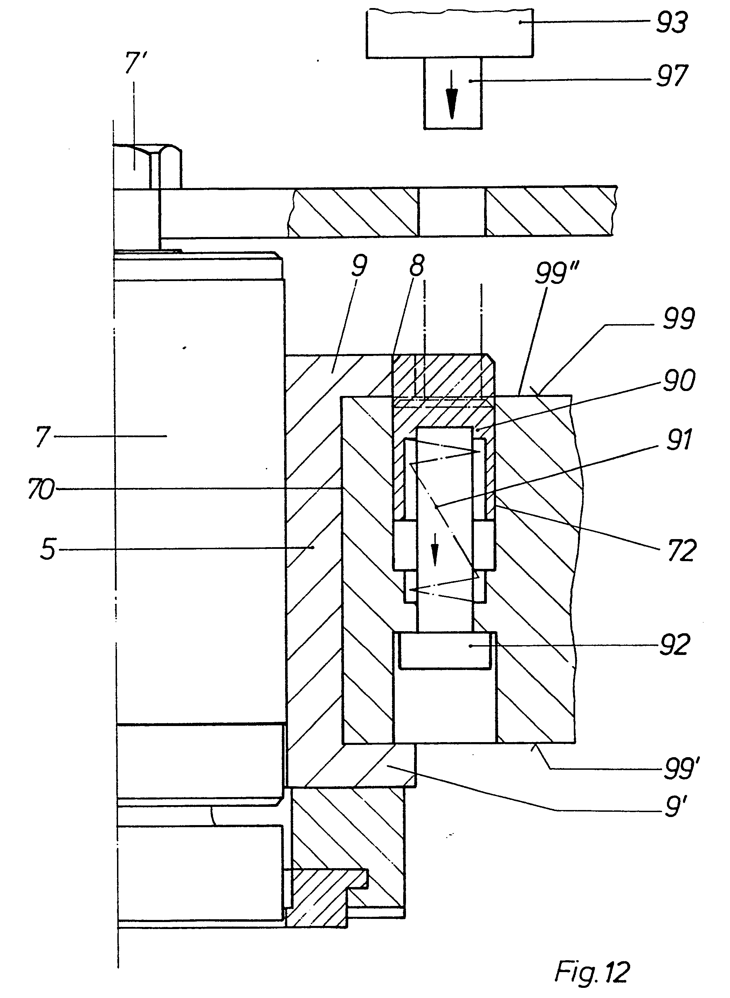

Mit dem unteren Teil der Schwenkachse 46 fest verbunden sind vier Greifzangen 57, die auf der Schwenkachse 46 paarweise übereinander und gegeneinander um jeweils 180° versetzt angeordnet sind. Der vertikale Abstand der übereinander angeordneten Paare von Greifzangen 57 ist entsprechend dem vertikalen Abstand der Revolverteller 1, 2 derart ausgelegt, dass ein problemloses Greifen von Werkzeugeinsätzen 5, 6 in den Revolvertellern möglich ist. Die zu erfassenden Werkzeugeinsätze 5, 6 sind, wie noch näher zu erläutern sein wird, mit entsprechenden Kupplungsteilen 5', 6' ausgerüstet, die zum Zusammenwirken mit entsprechenden Funktionselementen der Greifzangen 57 ausgestaltet sind. Mit 64 ist ein Sicherungsbügel bezeichnet, der an den Greifzangen angebracht ist, die zum Erfassen der in dem oberen Revolverteller 1 befindlichen Werkzeugeinsätze 5 konzipiert sind. Das in dem Werkzeugeinsatz 5 gehaltene Werkzeug besteht unter anderem aus einem, in einem Stempelhalter 7 (Fig. 12) geführten Stempel, der eine bestimmte Position einnehmen muss, so dass dem Sicherungsbügel 64, der an seinem, der Greifzange 57 abgekehrten Ende in einer halbkreisförmigen Öffnung 64' endet, die Aufgabe zukommt, den Stempel über ein entsprechendes Kupplungsteil 7' (Fig. 12) zu arretieren.

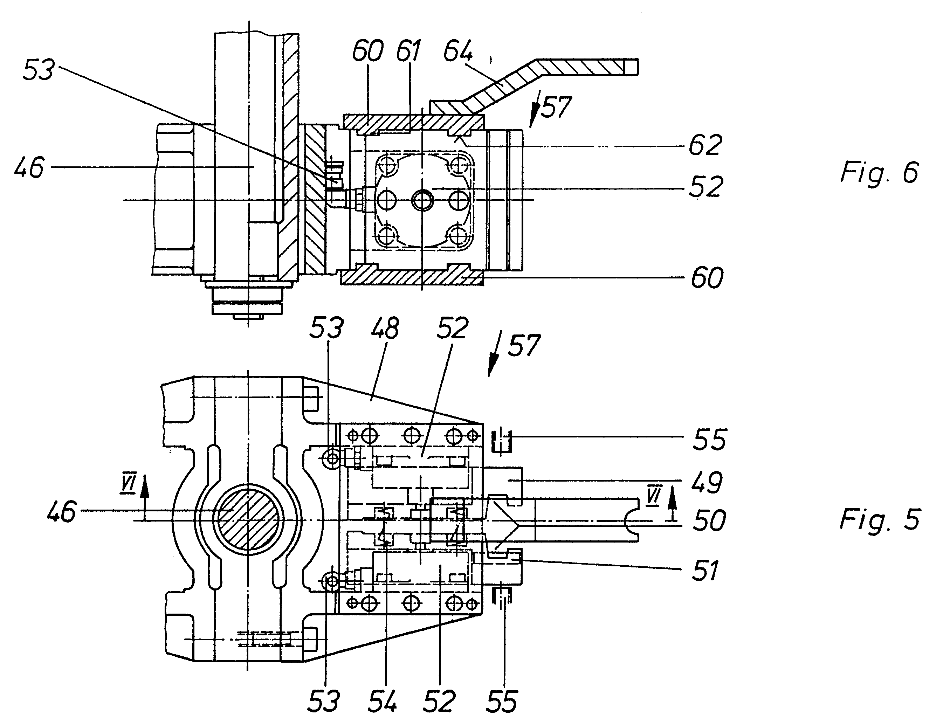

Der konstruktive Aufbau der Greifzangen 57 sowie ihre Wirkungsweise ist im einzelnen aus den Fig. 5, 6 und 7 ersichtlich. Hiernach bestehen die Greifzangen 57 in ihrem oberen und unteren Teil aus Deckplatten 60, zwischen welchen beiderseits Kurzhubzylinder 52 angeordnet sind, die über Anschlüsse 53 mit einem Druckmedium beaufschlagt werden können. Die Kolben der Kurzhubzylinder 52 wirken mit Spannbacken 49 zusammen und werden im drucklosen Zustand durch Rückstellfedern 54 in ihre Ausgangslage verschoben. Die Spannbacken werden im Bereich der Deckplatten über besondere Führungsnasen 61 geführt, die in besondere Nuten 62 der Spannbacken eingreifen. Mit 55 sind beiderseits der, aus dem Bereich der Deckplatten 60 hinausragenden Spannbacken angeordnete Sensoren bezeichnet, die der automatischen Erfassung des Öffnungs- oder Schliesszustandes der Greifzangen 57 dienen. Diese Sensoren 55 können grundsätzlich von beliebiger Art sein und beispielsweise als induktive oder kapazitive Annäherungsschalter ausgeschaltet sein, die bei Annäherung der Spannbacken 49 ein entsprechendes elektrisches Signal auslösen.

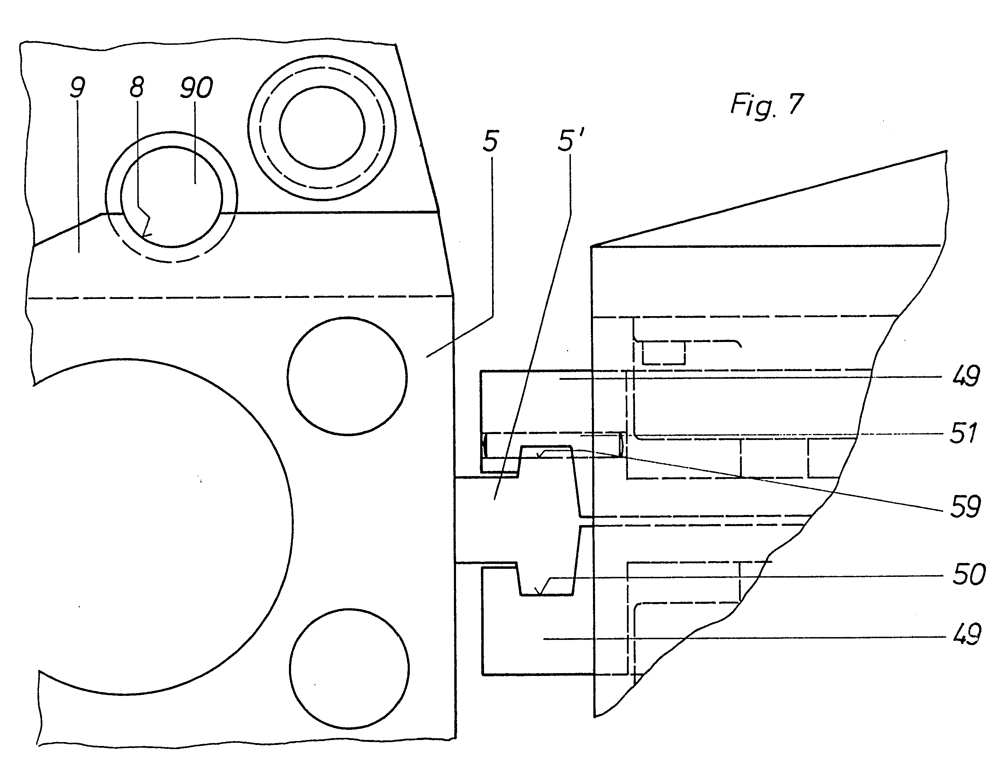

Wie aus den Fig. 5 und 7 im einzelnen hervorgeht, sind die an den Werkzeugeinsätzen 5, 6 befindlichen Kupplungsteile in der Draufsicht, d.h. in der Ebene der Revolverteller 1, 2 gesehen im Querschnitt T-förmig ausgestaltet, wobei die Spannbacken 49 in dem, mit den Kupplungsteilen 5', 6' zusammenwirkenden Abschnitten eine dementsprechende Ausgestaltung erfahren haben. Das heisst die Spannbacken 49 hintergreifen die T-förmige Struktur der Kupplungsteile 5', 6', so dass bei einem horizontalen Zug der Greifereinrichtung 12 der entsprechende Werkzeugeinsatz 5 oder 6 eine zuverlässige formschlüssige Fixierung erfährt. Fig. 5 zeigt in der oberen Hälfte die Spannbacke 49 in der Schliessstellung, während sie in der unteren Hälfte in der Öffnungsstellung gezeigt ist. Die Greifzangen 57 sind über das Spannbackengehäuse 48 unmittelbar an der Schwenkachse 46 befestigt.

Fig. 7 zeigt unter Ziff. 51 einen Stift, der im Bereich des Klauenmaules 50 in eine horizontal in Richtung auf den zu erfassenden Werkzeugeinsatz 5 zu verlaufende Bohrung 50 in der Spannbacke 49 eingesetzt ist, der in seinem mittleren Abschnitt während der Schliessbewegung der Greifzange 57 mit einer entsprechenden Ausnehmung in dem Kupplungsteil 5' in Eingriff bringbar ist. Der Stift 51 dient auf diese Weise der vertikalen Sicherung des Werkzeugeinsatzes 5 bzw. 6.

Wie sich aus dem vorstehenden ergibt, ist mit einer derartig ausgestalteten Greifereinrichtung 12 gleichzeitig eine Entnahme zweier, jeweils dem oberen Revolverteller 1 und dem unteren Revolverteller 2 zuzuordnenden, mit entsprechenden Werkzeugen bestückter Werkzeugeinsätze 5, 6 aus der Magazinkette 11 bzw. aus den übereinander angeordneten Revolvertellern 1, 2 und deren gegenseitiges Austauschen auf automatischem, rechnergesteuertem Wege möglich.

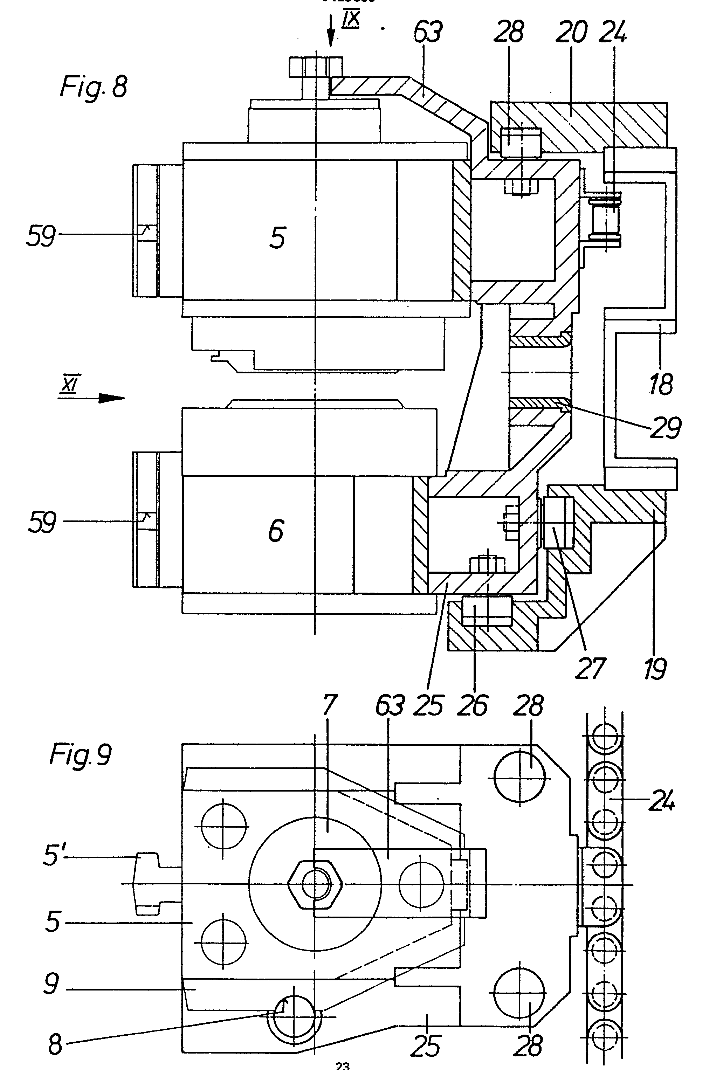

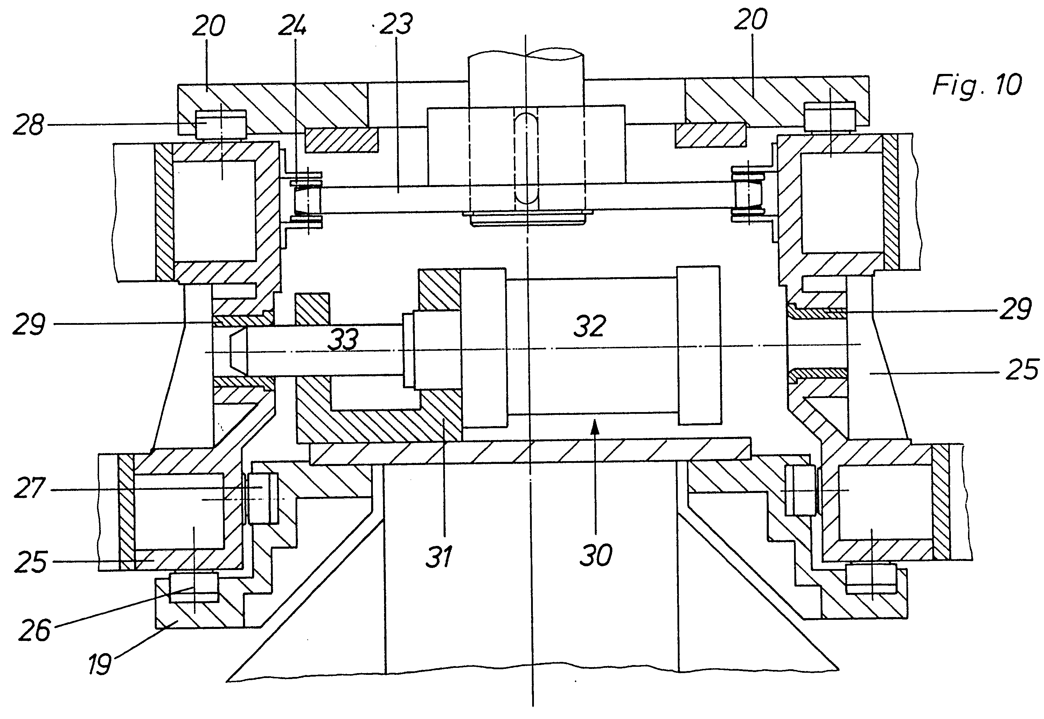

Gemäss den Fig. 8 bis 10 besteht das Kettenmagazin 11 aus einer Rollenkette 24, an welcher die Aufnahmesegmente 25 befestigt sind. Die Führung der Aufnahmesegmente 25 erfolgt jeweils in unteren und oberen Führungsschienen 20, 19, wobei mit den oberen Führungsschienen 20 Führungsrollen 28 und mit den unteren Führungsschienen 19 sowohl Führungsrollen 26 als auch Tragrollen 27 zusammenwirken. Die Tragrolle dient der vertikalen Führung der Aufnahmesegmente, während die Führungsrollen der genauen horizontalen Positionierung der Aufnahmesegmente dienen. Letztere sind darüber hinaus mit Sicherungsbügeln 63 ausgerüstet, deren Aufbau und Wirkungsweise im Rahmen des beschriebenen Werkzeugwechsels derjenigen der bereits beschriebenen Sicherungsbügel 64 entspricht, so dass auf eine wiederholte Beschreibung verzichtet wird. Wie aus Fig. 8 ferner hervorgeht, sind die Führungsschienen 19 und 20 unmittelbar an dem Aufsatz 18 befestigt. Die Aufnahmesegmente sind jeweils paarweise übereinander angeordnet, und zwar in einem vertikalen Abstand, der im wesentlichen demjenigen der Revolverteller 1 und 2 bzw. der Greifzangen 57 entspricht. Dabei ist der, jeweils zwei Aufnahmesegmente 25 verbindende Mittelabschnitt 14 mit einer Arretierbuchse 29 ausgerüstet. Wie insbesondere aus Fig. 10 hervorgeht, besteht die, der Fixierung der Magazinkette 11 in den der Entnahme bzw. dem Einsetzen von Werkzeugeinsätzen in diese erforderlichen Stellungen dienende Arretiereinrichtung 30 aus einer Kolben-Zylinder-Einheit 32, deren Zylinder an einem Führungslager 31 abgestützt ist und deren Kolbenstange als Arretierbolzen 33 in den genannten Positionen mit einer Arretierbuchse 29 in Eingriff bringbar ist. Die Arretiereinrichtungen 30 sind gemäss Fig. 2 jeweils unmittelbar der Werkzeugwechseleinrichtung 4 sowie der Werkzeugbeschickungseinrichtung 15 benachbart angeordnet. Das Führungslager 31 der Kolben-Zylinder-Einheit 32 ist an dem Aufsatz 18 befestigt.

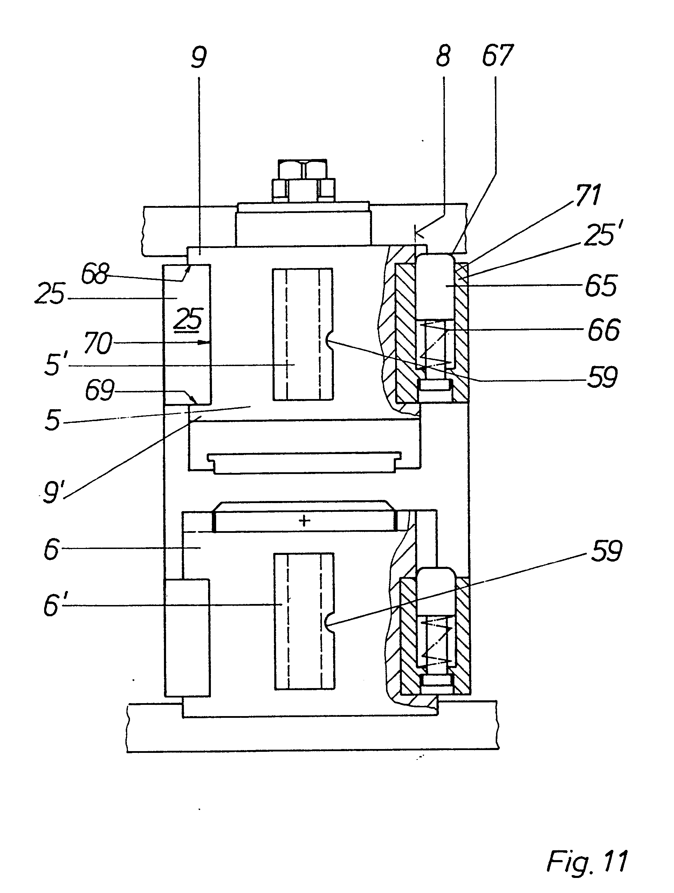

Fig. 11 zeigt, dass die Aufnahmesegmente 25 derart ausgestaltet sind, dass am oberen und unteren Bereich des Werkzeugeinsatzes 5 befindliche Flansche 9 bzw. 9' an den, sich vertikal und von der Rollenkette 24 fort erstreckenden Teilen 25' bezüglich deren jeweiliger Ober- und Unterseite 68, 69 sowie deren seitlicher Begrenzungsfläche 70 spielfrei anliegen. Dabei wird ein unbeabsichtigtes Herausgleiten des Werkzeugeinsatzes 5 aus dem Aufnahmesegment 25 durch einen Rastbolzen 65 verhindert, der in einer vertikal verlaufenden Bohrung 71 des Teiles 25' der Aufnahmetasche 25 gehalten ist. In der Ruheposition, die durch eine Feder 66 gesichert ist, befindet sich der durch eine Kuppe 67 gekennzeichnete obere Teil des Rastbolzens 65 mit einer ungefähr halbkreisförmigen Ausnehmung 8 in dem oberen Flansch 9 formschlüssig im Eingriff. Die durch die Feder 66 aufgebrachte Vorspannung des Rastbolzens 65 ist derart ausgelegt, dass ein über das Kupplungsteil 5' auf den Werkzeugeinsatz 5 mittels der Greifereinrichtung 12 einwirkender Horizontalzug unter Überwindung der Vorspannkraft der Feder 66 den Rastbolzen 65 in die Bohrung 71 hinein verschieben kann, so dass der Werkzeugeinsatz 5 aus dem Aufnahmesegment 25 herausgezogen werden kann. In identischer Weise, d.h. unter Überwindung der Vorspannkraft der Feder 66 kann ein Werkzeugeinsatz 5 in das Aufnahmesegment 25 eingesetzt werden. Die über die Kolben-Zylinder-Einheit 43 auf die Greifzangen 57 übertragene Schub- bzw. Zugkraft muss naturgemäss entsprechend ausgelegt sein, damit diese Vorspannkraft der Feder 66 überwunden werden kann.

Die radiale Sicherung des Werkzeugeinsatzes 6 erfolgt in ähnlicher Weise, so dass auf eine diesbezügliche Beschreibung verzichtet wird.

Die Revolverteller 1 und 2 der Revolverschneidpresse sind für die Aufnahme der jeweiligen Werkzeugeinsätze 5 und 6 umfangsseitig mit radial nach aussen offenen Ausnehmungen versehen, in welche diese Werkzeugeinsätze in radialer Richtung eingesetzt werden können bzw. aus welchen sie in der gleichen Richtung entfernt werden können. Wie aus den Fig. 4, 7 und 12 hervorgeht, erfolgt die Fixierung der Werkzeugeinsätze 5 und 6 in den Ausnehmungen der Revolverteller 1 und 2 in ähnlicher Weise wie in den Aufnahmesegmenten 25. Das heisst die Werkzeugeinsätze 5, 6 liegen mit ihren oberen und unteren Flanschen 9, 9' an der Oberfläche 99 der Revolverteller 1, 2 bzw. deren Unter- und Oberseiten 99', 99" spielfrei an. Das gleiche gilt für die seitliche Begrenzungsfläche 70 der Werkzeugeinsätze 5, 6, welche an den entsprechenden Bregrenzungsflächen der Ausnehmungen in den Revolvertellern 1, 2 ebenfalls spielfrei anliegen. Eine radiale Fixierung der Werkzeugeinsätze 5, 6 erfolgt mittels Sperrbolzen 90, die in entsprechenden Bohrungen 72 des jeweiligen Revolvertellers 1, 2, geführt sind. Die Sperrbolzen 90 werden unter Mitwirkung eines Bundes 92 sowie einer Feder 91 in einer Stellung gehalten, in welcher die, dem oberen Revolverteller 1 zugeordneten Sperrbolzen in die, in den oberen Flansch 9 des Werkzeugeinsatzes 5 eingearbeitete, halbkreisförmige Ausnehmung 8 hineinragen und bei welcher die, dem unteren Revolverteller 2 zugeordneten Sperrbolzen 90 in eine entsprechende, in den unteren Flansch 9' des Werkzeugeinsatzes 6 eingearbeitete, halbkreisförmige Ausnehmung hineinragen. Durch diese Sperrbolzen 90 werden die Werkzeugeinsätze 5, 6 somit formschlüssig in radialer Richtung bezüglich des jeweiligen Revolvertellers 1, 2 arretiert.

Die Lösung der Arretierung der in den Revolvertellern 1, 2 befindlichen Werkzeugeinsätze erfolgt mittels Kolben-Zylinder-Einheiten 93, 94, die jeweils über Halterungen 95, 96 am Maschinengestell 10 der Revolverschneidpresse befestigt sind. Mittels der Stössel 97, 98 der Kolben-Zylinder-Einheiten 93, 94 können die Sperrbolzen 90 zumindest so weit in die jeweiligen Bohrungen 72 entgegen der Wirkung der Kraft der jeweiligen Feder 91 hineingedrückt werden, dass deren Oberkante unterhalb der Oberfläche 99 des jeweiligen Revolvertellers gelangt. In dieser Stellung ist somit die radiale Arretierung der Werkzeugeinsätze bezüglich der Revolverteller 1, 2 aufgehoben. Die Stössel 97, 98 sind hierbei in Abstimmung mit den Ausmassen der Ausnehmungen 8 in den Flanschen 9 bzw. 9' derart dimensioniert, dass bei ausgefahrenen Stösseln 97, 98 ein problemloses Herausziehen der Werkzeugeinsätze 5, 6 gegeben ist.

Zur Durchführung eines Wechsels des im oberen Revolverteller 1 üblicherweise im wesentlichen aus Stempelhalter, Stempel und Abstreifer und im unteren Revolverteller 2 aus der entsprechenden Matrize bestehenden Werkzeugs wird zunächst die Magazinkette unter Betätigung des Antriebes 22 derart verfahren, dass das entsprechende Paar von übereinander angeordneten Aufnahmesegmenten 25 sich in der Entnahmeposition 75 befindet. Anschliessend wird die Magazinkette 11 durch Ausfahren des Arretierbolzens 33 in die Arretierbuchse 29 hinein in dieser Stellung arretiert. Mittels des Motors 39 wird der Ausleger 40 bis auf die Höhe der Magazinkette 11 verfahren und anschliessend durch Druckbeaufschlagung der Kolben-Zylinder-Einheit 43 die Greifereinrichtung 12 mit geöffnetem Klauenmaul 50 an die Magazinkette 11 derart herangefahren, dass mittels der Spannbacken 49 die beiden Kupplungsteile 5' und 6' der in den Aufnahmesegmenten 25 befindlichen Werkzeugeinsätze erfasst werden können. Gleichzeitig wird mittels des Sicherungsbügels 64 das entsprechende Kupplungsteil 7' des Stempelhalters untergriffen. Mit geschlossenen Spannbacken werden unter Lösung der durch die federbelasteten Rastbolzen 65 gegebenen Sicherung die Werkzeugeinsätze durch Druckbeaufschlagung der Kolben-Zylinder-Einheit 43 in der Gegenrichtung zurückgezogen, so dass die Werkzeugeinsätze 5 und 6 dem Kettenmagazin entnommen werden. Durch Betätigung des Motors 39 wird anschliessend die Greifereinrichtung 12 bis auf die Höhe der Revolverteller 1, 2 abgesenkt, wobei gleichzeitig durch Betätigen des Antriebes 47 die Greifzangen 57 um die Schwenkachse 46 um 180° verschwenkt werden, so dass die Greifzangen 57, mittels welchen die Werkzeugeinsätze 5 bzw. 6 aus der Magazinkette entnommen werden wird, von der Revolverschneidpresse abgewandt werden. Das nunmehr der Revolverschneidpresse zugekehrte Paar von Greifzangen 57 wird durch Betätigung der Kolben-Zylinder-Einheit 43 in Richtung auf die Revolverschneidpresse hin bewegt, so dass mittels der Spannbacken 49 dieses Greifzangenpaares die Kupplungsteile 5' und 6' der Werkzeugeinsätze 5 und 6 erfasst werden können, die in den Revolvertellern 1 und 2 eingesetzt sind und ausgewechselt werden sollen. Hierzu werden die Kolben-Zylinder-Einheiten 93 und 94 mit einem Druckmedium beaufschlagt, so dass die Sperrbolzen 90 entgegen der Kraft der Federn 91 bis unter die Oberfläche der Revolverteller 1, 2 zurückgedrückt werden und die Werkzeugeinsätze 5, 6 durch Betätigung der Kolben-Zylinder-Einheit 43 wiederum in Gegenrichtung aus den Revolvertellern 1, 2 entfernt werden können. Nunmehr wird die gesamte Greifereinrichtung 12 um 180° mittels des Antriebes 47 geschwenkt, so dass die Werkzeugeinsätze 5, 6, die zuvor der Magazinkette 11 entnommen worden sind, nunmehr durch Betätigung der Kolben-Zylinder-Einheit 43 in die Revolverteller 1, 2 eingeschoben werden können.

Nach dem Öffnen der Greifzangen 57 wird die Greifereinrichtung 12 wieder zurückgezogen und mit dem daran befestigten Ausleger 40 in die obere Position, d.h. der Magazinkette 11 benachbart verfahren. Die, den Revolvertellern 1, 2 entnommenen Werkzeugeinsätze 5, 6 werden in einen freien Platz der Magazinkette 11 eingesetzt. Der Arbeitsprozess der Revolverschneidpresse kann sofort nach dem Werkzeugwechsel fortgesetzt werden, es sei denn, es müssen mehrere Werkzeugeinsätze ausgewechselt werden.

Das Einführen der Werkzeugeinsätze 5, 6 in die Werkzeugbeschickungsvorrichtung 15, die sich von der Werkzeugwechselvorrichtung 4 lediglich darin unterscheidet, dass auf der Schwenkachse lediglich zwei, untereinander angeordnete Greifzangen 57 angeordnet sind, erfolgt manuell, wobei der Vorgang des Übertragens der Werkzeugeinsätze von dieser Werkzeugbeschickungseinrichtung auf die Magazinkette 11 dem vergleichbaren Vorgang zwischen der Werkzeugwechselvorrichtung 4 und der Magazinkette 11 entspricht, so dass auf eine diesbezügliche Beschreibung verzichtet wird.

**Patentansprüche**

1. Stanzmaschine mit einer Vorrichtung zum Speichern und Wechseln von Werkzeugen, welche als eine horizontal umlaufbar gelagerte Magazinkette (11) ausgebildet ist, die mit Aufnahmesegmenten (25) für Werkzeugeinsätze (5, 6) versehen ist, wobei die Werkzeugeinsätze (5, 6) horizontal in die Aufnahmesegmente (25) einsetzbar sowie aus diesen entnehmbar sind und mit einer Werkzeugwechseleinrichtung (4) zur Entnahme von Werkzeugeinsätzen (5, 6) aus den Aufnahmesegmenten (25) sowie zum Einsetzen von Werkzeugeinsätzen (5, 6) in die Aufnahmesegmente (25), dadurch gekennzeichnet, dass die Stanzmaschine eine Revolverschneidpresse mit zwei übereinander angeordneten Revolvertellern (1, 2) ist, dass die Magazinkette (11) auf einem Maschinengestell (10) oberhalb der Ebene der Revolverteller (1, 2) gelagert ist, dass auf der Magazinkette (11) eine Vielzahl von jeweils zwei übereinander angeordneten Aufnahmesegmenten (25) befestigt ist, dass der vertikale Abstand der Aufnahmesegmente (25) auf denjenigen der übereinander angeordneten Revolverteller (1, 2) abgestimmt ist und dass die Magazinkette (11) in der von der Position der Werkzeugwechseleinrichtung (4) abhängigen Stellung einer Arretiereinrichtung (30) fixierbar ist.

2. Stanzmaschine nach Anspruch 1, dadurch gekennzeichnet, dass die Arretiereinrichtung (30) aus einer ortsfest gelagerten Kolben-Zylinder-Einheit (32) besteht, deren Kolbenstange einen Arretierbolzen (33) bildet, der mit Arretierbuchsen (29) in Eingriff bringbar ist, die an der Magazinkette (11) befestigt sind.

3. Stanzmaschine nach Anspruch 1 oder 2, dadurch gekennzeichnet, dass die Magazinkette (11) bzw. die an ihr befestigten Aufnahmesegmente (25) mittels Tragrollen (27) und Führungsrollen (26, 28) in ortsfest gelagerten Führungsschienen (19, 20) seitlich und vertikal geführt sind.

4. Stanzmaschine nach einem der vorangehenden Ansprüche 1 bis 3, dadurch gekennzeichnet, dass die Werkzeugwechselvorrichtung (4) aus einem vertikal entlang einer Säule (13) motorisch verfahrbaren Ausleger (40) besteht, an dessen, der Säule (13) abgekehrtem Ende ein in der Horizontalebene in Richtung auf die Magazinkette (11) bzw. die Revolverteller (1, 2) hin verfahrbare Greifereinrichtung (12) um eine vertikale Schwenkachse (46) motorisch schwenkbar gelagert ist.

5. Stanzmaschine nach Anspruch 4, dadurch gekennzeichnet, dass die Greifereinrichtung (12) im wesentlichen aus zwei Paar, gegeneinander auf der Schwenkachse (46) um 180° versetzt angeordneten motorisch betätigbaren Greifzangen (57) besteht, die mit Spannbacken (49) ausgerüstet sind, deren Gestalt derjenigen eines an den Werkzeugeinsätzen (5, 6) befindlichen Kupplungsteiles (5', 6') angepasst ist.

6. Stanzmaschine nach Anspruch 5, dadurch gekennzeichnet, dass die vorzugsweise in die Horizontalebene beweglich angeordneten Spannbacken (49) zur formschlüssigen Fixierung des jeweiligen Werkzeugeinsatzes (5, 6) in vertikaler Richtung eingerichtet sind.

7. Stanzmaschine nach den Ansprüchen 5 oder 6, dadurch gekennzeichnet, dass die Spannbacken (49) zur formschlüssigen Fixierung des Kupplungsteils (5', 6') in einer von der Magazinkette (11) bzw. den Revolvertellern (1, 2) abgekehrten Richtung eingerichtet sind.

8. Stanzmaschine nach einem der Ansprüche 4 bis 7, dadurch gekennzeichnet, dass die Greifereinrichtung (12) mit Sensoren (55) zur Erfassung des Öffnungs- oder Schliesszustandes der Spannbacken (49) ausgerüstet ist.

9. Stanzmaschine nach einem der Ansprüche 4 bis 8, dadurch gekennzeichnet, dass die Greifereinrichtung (12) mit einem Sicherungsbügel (64) ausgerüstet ist, mittels welchem ein in dem Werkzeugeinsatz (5) befindliches Werkzeug in einer vertikalen Position fixiert wird.

10. Stanzmaschine nach einem der vorangegangenen Ansprüche, dadurch gekennzeichnet, dass die Aufnahmesegmente (25) der Magazinkette (11) zur vertikalen formschlüssigen Fixierung der Werkzeugeinsätze (5, 6) eingerichtet sind.

11. Stanzmaschine nach Anspruch 10, dadurch gekennzeichnet, dass die Werkzeugeinsätze (5, 6) in den Aufnahmesegmenten (25) in der Horizontalebene in Einsatz- bzw. Entnahmerichtung lösbar formschlüssig fixiert sind.

12. Stanzmaschine nach Anspruch 11, dadurch gekennzeichnet, dass zur lösbaren formschlüssigen Fixierung der Werkzeugeinsätze (5, 6) die Aufnahmesegmente (25) mit Rastbolzen (65) ausgerüstet sind, die mit Ausnehmungen (8) von an den Werkzeugeinsätzen (5, 6) befestigten Flanschen (9) in Eingriff stehen.

13. Stanzmaschine nach einem der vorangehenden Ansprüche, dadurch gekennzeichnet, dass die Aufnahmesegmente (25) mit Sicherungsbügeln (63) ausgerüstet sind, mittels welchen ein in dem Werkzeugeinsatz (5) befindliches Werkzeug in seiner vertikalen Stellung fixiert wird.

14. Stanzmaschine nach einem der vorangegangenen Ansprüche, dadurch gekennzeichnet, dass der Magazinkette (11) eine Werkzeugbeschickungseinrichtung (15) zugeordnet ist, die im wesentlichen aus einem vertikal motorisch entlang einer Säule (16) verfahrbaren Ausleger (40') besteht, an dessen der Säule (16) abgekehrtem Ende eine um eine vertikale Schwenkachse (46') schwenkbar gelagerte Greifereinrichtung (12') angeordnet ist.

15. Stanzmaschine nach Anspruch 14, dadurch gekennzeichnet, dass die Greifereinrichtung (12') wenigstens ein Paar, auf der Schwenkachse (46') übereinander angeordneter Greifzangen (57) umfasst.

## Claims

1. Stamping machine provided with a device for the storage and changing of tools, said device comprising a horizontal magazine chain (11) which is mounted for circulatory movement and which is provided with receiving segments (25) for tool units (5, 6), wherein the tool units (5, 6) are insertable horizontally into the receiving segments (25) and are also removable therefrom, and the machine also being provided with a tool changing device (4) for the removal of tool units (5, 6) from the receiving segments (25) as well as for the insertion of tool units (5, 6) into the receiving segments (25), characterised in that the stamping machine is a turret piercing press with two turret plates (1, 2) arranged one above the other, in that the magazine chain (11) is mounted on a machine frame (10) above the level of the turret plates (1, 2) in that a plurality of receiving segments (25) arranged in pairs one above the other are secured to the magazine chain (11), in that the vertical spacing of the receiving segments (25) forming each pair is determined by the vertical spacing of the turret plates (1, 2) arranged above one another, and in that the magazine chain (11) can be held by means of an arresting device (30) in a setting which is dependent upon the position of the tool changing device (4).

2. Stamping machine according to claim 1, characterised in that the arresting device (30) comprises a piston-cylinder unit (32) which is mounted in a spatially fixed position, with its piston rod forming an arresting pin (33) which can be brought into engagement with retention sockets (29) which are secured to the magazine chain (11).

3. Stamping machine according to claim 1 or 2, characterised in that the magazine chain (11) and the receiving segments (25) secured to it are laterally and vertically guided for movement on fixed position guide rails (19, 20) by means of support rollers (27) and guide rollers (26, 28).

4. Stamping machine according to one of the preceding claims 1 to 3, characterised in that the tool changing device (4) comprises a beam arm (40) which is arranged for motor-driven displacement vertically up and down a pillar (13), and wherein, at the end of the beam arm remote from the pillar (13), there is provided a gripping device (12) which is displaceable in the horizontal plane in the direction towards the magazine chain (11) and towards the turret plates (1, 2), the gripping device being mounted for motor-driven pivotal movement about a vertical pivot shaft (46).

5. Stamping machine according to claim 4, characterised in that the gripping device (12) essentially comprises two pairs of gripping tongs (57) which are actuable by motor means and which are arranged offset relative to one another by 180° on the pivot shaft (46), with the gripping tongs being provided with clamping jaws (49) the shape of which is matched to the shape of a coupling piece (5', 6') located on the tool units (5, 6).

6. Stamping machine according to claim 5, characterised in that the clamping jaws (49) which are arranged to be movable preferably in the horizontal plane are constructed for positive fixing of the respective tool units (5, 6) in the vertical direction.

7. Stamping machine according to claim 5 or 6, characterised in that the clamping jaws (49) are constructed for the positive fixing of the coupling pieces (5', 6') in a direction away from the magazine chain (11) and the turret plates (1, 2).

8. Stamping machine according to one of claims 4 to 7, characterised in that the gripping device (12) is equipped with sensors (55) for determining the open or closed state of the clamping jaws (49).

9. Stamping machine according to one of claims 4 to 8, characterised in that the gripping device (12) is equipped with a securing hoop (64) by means of which a tool located in the tool unit (5) is fixed in a vertical position.

10. Stamping machine according to one of the preceding claims, characterised in that the receiving segments (25) of the magazine chain (11) are constructed for vertical positive fixing of the tool units (5, 6).

11. Stamping machine according to claim 10, characterised in that the tool units (5, 6) are fixed in the receiving segments (25) positively but releasably in the horizontal plane in the direction of insertion and removal.

12. Stamping machine according to claim 11, characterised in that for the releasable positive fixing of the tool units (5, 6) the receiving segments (25) are equipped with locking pins (65) which engage with recesses (8) in flanges (9) secured to the tool units (5, 6).

13. Stamping machine according to one of the preceding claims, characterised in that the receiving segments (25) are equipped with retaining hoops (63) by means of which a tool located in the tool unit (5) is fixed in its vertical setting.

14. Stamping machine according to one of the preceding claims, characterised in that the magazine chain (11) is associated with a tool loading device (15) which essentially comprises a motor-driven beam arm (40') which is displaceable vertically up and down a pillar (16), with a gripping device (12') mounted for pivotal movement about a vertical pivot shaft (46') being arranged at the end of the beam arm which is remote from the pillar (16).

15. Stamping machine according to claim 14, characterised in that the gripping device (12') includes at least one pair of gripping tongs (57) arranged above one another on the pivot shaft (46').

## Revendications

1. Machine à découper incluant un dispositif pour emmagasiner et échanger les outils, constituée sous la forme d'une chaîne magasin (11) montée de façon à pouvoir circuler horizontalement et qui est pourvue des segments de réception (25) pour des porte-outils (5, 6), ces porte-outils (5, 6) pouvant être mis en place horizontalement dans ces segments de réception (25) et en être enlevés, et un dispositif de changement d'outil (4) pour enlever les porte-outils (5, 6) des segments de réception (25) ainsi que pour les mettre en place dans ces segments de réception (25), caractérisée en ce que la machine à découper est une presse revolver de découpage comportant deux plateaux revolvers (1, 2) disposés l'un au-dessus de l'autre, en ce que la chaîne magasin (11) repose sur un bâti de machine (10) au-dessus du plan des plateaux revolvers (1, 2), en ce qu'une multiplicité de paires de segments de réception (25) disposés l'un au-dessus de l'autre est fixée sur la chaîne magasin (11), en ce que l'écartement vertical des segments de réception (25) est adapté à celui des plateaux revolvers (1, 2) disposés l'un au-dessus de l'autre et en ce que la chaîne magasin (11) peut être immobilisée dans la position dépendant de celle du dispositif de changement d'outil (4) au moyen d'un dispositif d'arrêt (30).

2. Machine à découper selon la revendication 1, caractérisée en ce que le dispositif d'arrêt (30) est constitué par un vérin (32) monté en un emplacement localement fixe, dont la tige de piston constitue une cheville d'arrêt (33) qui peut être amenée en prise avec des douilles d'arrêt (29), lesquelles sont fixées sur la chaîne magasin (11).

3. Machine à découper selon la revendication 1 ou 2, caractérisée en ce que la chaîne magasin (11) ou les segments de réception (25) qui lui sont fixés, sont guidés latéralement et verticalement au moyen de rouleaux supports (27) et de rouleaux de guidage (26, 28) dans des rails de guidage (19, 20) montés en un emplacement fixe.

4. Machine à découper selon l'une des revendications précédentes 1 à 3, caractérisée en ce qu le dispositif de changement d'outil (4) est constitué par un bras (40) pouvant se déplacer verticalement le long d'une colonne (13) grâce à un moteur et en ce que sur ce bras, à l'extrémité opposée à la colonne (13), un dispositif de saisie (12) pouvant se déplacer dans le plan horizontal en direction de la chaîne magasin (11) ou des plateaux revolvers (1, 2) est monté de façon à pouvoir pivoter autour d'un axe de pivotement (46) sous l'action d'un moteur.

5. Machine à découper selon la revendication 4, caractérisée en ce que le dispositif de saisie (12) est constitué essentiellement par deux paires de pinces de saisie (57), disposées avec décalage mutuel de 180° sur l'axe de pivotement (46) et pouvant être actionnées par moteur, ces pinces étant équipées de mâchoires de serrage (49) dont la forme est adaptée à celle d'une portion d'accouplement (5', 6') se trouvant sur les porte-outils (5, 6).

6. Machine à découper selon la revendication 5, caractérisée en ce que les mâchoires de serrage (49), disposées de préférence de façon à pouvoir se déplacer dans le plan horizontal, sont agencées pour le maintien par conjugaison de formes, de porte-outil correspondant (5, 6) dans le sens vertical.

7. Machine à découper selon la revendication 5 ou 6, caractérisée en ce que les mâchoires de serrage (49) sont agencées pour le maintien par conjugaison de formes, de la portion d'accouplement (5', 6') dans une direction opposée à la chaîne magasin (11) ou aux plateaux revolvers (1, 2).

8. Machine à découper selon l'une des revendications 4 à 7, caractérisée en ce que le dispositif de saisie (12) est équipé de capteurs (55) pour détecter l'état d'ouverture ou de fermeture des mâchoires de serrage (49).

9. Machine à découper selon l'une des revendications 4 à 8, caractérisée en ce que le dispositif de saisie (12) est équipé d'un étrier de sûreté (64), au moyen duquel un outil se trouvant dans un porte-outil (5) est fixé immobilisé dans une position verticale.

10. Machine à découper selon l'une des revendications précédentes, caractérisée en ce que les segments de réception (25) de la chaîne magasin (11) sont agencés pour le maintien vertical par conjugaison de formes des porte-outils (5, 6).

11. Machine à découper selon la revendication 10, caractérisée en ce que les porte-outils (5, 6) sont fixés de façon amovible par conjugaison de formes, dans les segments de réception (25) dans la direction de mise en place et d'enlèvement dans le plan horizontal.

12. Machine à découper selon la revendication 11, caractérisée en ce que pour la fixation amovible, par conjugaison de formes, des porte-outils (5, 6), les segments de réception (25) sont équipés de chevilles d'arrêt (65) qui sont en prise avec des échancrures (8) de brides (9) fixées sur les porte-outils (5, 6).

13. Machine à découper selon l'une des revendications précédentes, caractérisée en ce que les segments de réception (25) sont équipés d'étriers de sûreté (63), au moyen desquels un outil se trouvant dans un porte-outil (5) est immobilisé dans sa position verticale.

14. Machine à découper selon l'une des revendications précédentes, caractérisée en ce que en ce que la chaîne magasin (11) est associée à un dispositif d'approvisionnement d'outil (15), qui est constitué essentiellement pour un bras (40') pouvant se déplacer verticalement grâce à un moteur le long d'une colonne (16) et en ce que sur ce bras, à l'extrémité opposée à la colonne (16), un dispositif de saisie (12') est monté avec possibilité de pivotement autour d'un axe de pivotement vertical (46').

15. Machine à découper selon la revendication 14, caractérisée en ce que le dispositif de saisie (12') comprend au moins une paire de pinces de saisie (57) disposées l'une au-dessus de l'autre sur l'axe de pivotement (46').

Fig. 1

0129866

*Fig. 2*

0129866

Fig. 3

Fig. 4

0129866

Fig. 6

Fig. 5

Fig. 7

9  8  90

5  5'

49

51

59

50

49

0129866

*Fig. 8*

59

5

59

6

$\overline{IX}$

63 28 20 24

$\overline{XI}$

18

29

27 19

7 63 25 26 28

*Fig. 9*

5'

5

9

8

24

25 28

23

Fig. 10

Fig. 11

*Fig.12*